# EUROPÄISCHE PATENTANMELDUNG

(11) **EP 1 130 052 A2**
(43) Veröffentlichungstag der Anmeldung: **05.09.2001**
(21) Anmeldenummer: 01103520.1
(22) Anmeldetag: 16.02.2001
(51) Int. Cl.: C08K 5/315, C08K 5/16, C09B 23/14

(54) **Verfahren zum Massefärben von Kunststoffen**

(30) Priorität: 29.02.2000 DE 10009580
(71) Anmelder: BAYER AG, 51368 Leverkusen (DE)
(72) Erfinder: Stawitz, Josef-Walter Dr., 51519 Odenthal (DE); Michaelis, Stephan Dr., 51519 Odenthal (DE)

(57) **Zusammenfassung**

Verfahren zum Massefärben von Kunststoffen, dadurch gekennzeichnet, dass man Farbstoffe der Formel 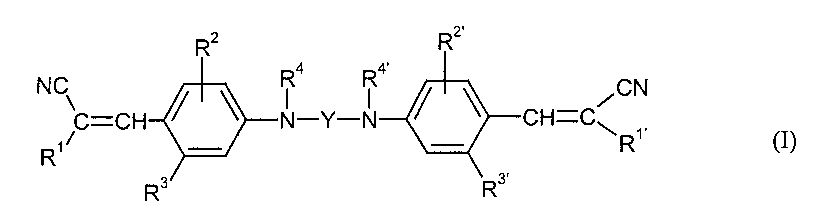 verwendet, worin
- Y: ein bivalenter Rest aus der Reihe der gegebenenfalls substituierten Arylene oder Alkylene ist, wobei die Alkylenreste gegebenenfalls durch Heteroatome wie O oder S unterbrochen sein können,
- R¹ und R^{1'}: unabhängig voneinander eine elektronenziehende Gruppe, vorzugsweise Cyano oder Alkoxycarbonyl, insbesondere C₁-C₄-Alkoxycarbonyl bedeuten,
- R², R^{2'}, R³ und R^{3'}: unabhängig voneinander Wasserstoff, Alkyl, insbesondere C₁-C₄-Alkyl, CF₃ oder Halogen, vorzugsweise F oder Cl bedeuten,
- R⁴ und R^{4'}: unabhängig voneinander für gegebenenfalls substituiertes Alkyl, vorzugsweise C₁-C₆-Alkyl oder C₇-C₁₂-Aralkyl, insbesondere Benzyl stehen.

## Beschreibung

Die Erfindung betrifft ein Verfahren zum Massefärben von Kunststoffen, das dadurch gekennzeichnet ist, dass man Farbstoffe der Formel (I) 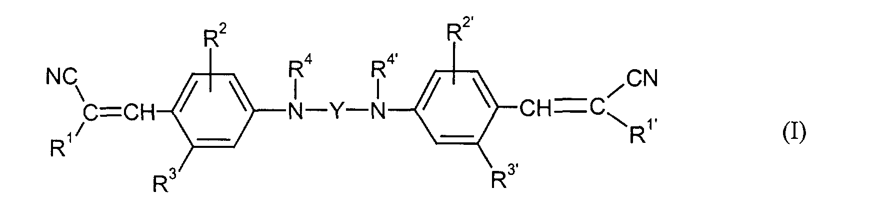 verwendet, worin
- Y: ein bivalenter Rest aus der Reihe der gegebenenfalls substituierten Arylene oder Alkylene ist, wobei die Alkylenreste gegebenenfalls durch Heteroatome wie O oder S unterbrochen sein können,
- R¹ und R^{1'}: unabhängig voneinander eine elektronenziehende Gruppe, vorzugsweise Cyano oder Alkoxycarbonyl, insbesondere C₁-C₄-Alkoxycarbonyl bedeuten,
- R², R^{2'}, R³ und R^{3'}: unabhängig voneinander Wasserstoff, Alkyl, insbesondere C₁-C₄-Alkyl, CF₃ oder Halogen, vorzugsweise F oder Cl bedeuten,
- R⁴ und R^{4'}: unabhängig voneinander für gegebenenfalls substituiertes Alkyl, vorzugsweise C₁-C₆-Alkyl oder C₇-C₁₂-Aralkyl, vorzugsweise Benzyl stehen.

In einer bevorzugten Ausführungsform steht
- Y: für gegebenenfalls substituiertes Phenylen oder gegebenenfalls substituiertes C₁-C₆-Alkylen, besonders bevorzugte Reste Y sind beispielsweise: 1,3-Phenylen, 1,4-Phenylen, Methyl-substituiertes 1,3- und 1,4-Phenylen, -CH₂-CH₂-, -CH₂CH₂CH₂-, -(CH₂)₄-, -CH₂-CH(CH₃)-, -CH₂CH₂-O-CH₂CH₂- und -CH₂CH₂-S-CH₂CH₂-.

Ganz besondere bevorzugt sind Alkylenreste, insbesondere -CH₂CH₂-, -(CH₂)₃-, -(CH₂)₄-, und -CH₂CH₂-O-CH₂CH₂-.

Bevorzugte Reste in der Bedeutung von R¹ und R^{1'} sind beispielsweise: -CN, -CO₂CH₃, -CO₂CH₂CH₃, -CO₂(CH₂)₂CH₃ und -CO₂(CH₂)₃CH₃.

Bevorzugte Reste in der Bedeutung von R², R^{2'}, R3 und R^{3'} sind beispielsweise Wasserstoff, Methyl, Ethyl, Cl, F, CF₃, Methoxy und Ethoxy.

Bevorzugte Reste in der Bedeutung von R⁴ und R^{4'} sind beispielsweise CH₃, Ethyl, n-Propyl, iso-Propyl, n-Butyl, iso-Butyl, sek.-Butyl und tert.-Butyl.

In einer bevorzugten Ausführungsform steht in der Formel (I) der erfindungsgemäßen Verwendung

R¹ = R^{1'}, R² = R^{2'}, R³ = R^{3'} und R⁴ = R^{4'}.

Besonders bevorzugt werden Farbstoffe der Formel (Ia) eingesetzt, 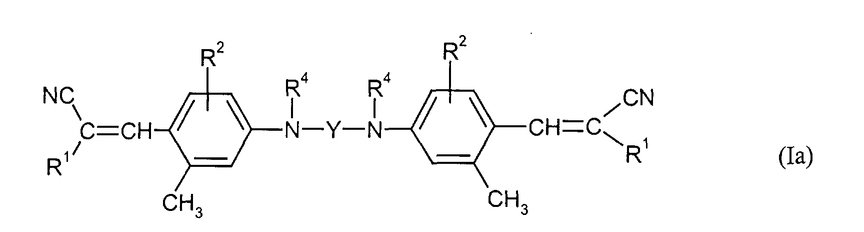 worin
- Y: für gegebenenfalls substituiertes Phenylen, insbesondere 1,3- oder 1,4-Phenylen oder für gegebenenfalls substituiertes C₂-C₆-Alkylen, insbesondere Ethylen, Propylen oder Butylen steht,
- R¹: für CN, CO₂CH₃, CO₂CH₂CH₃ oder CO₂(CH₂)₃CH₃ steht,
- R²: Wasserstoff, CH₃ oder CH₂CH₃ bedeutet und
- R⁴: für CH₃, CH₂CH₃, n-Propyl oder n-Butyl steht.

Ebenfalls bevorzugt werden die Farbstoffe der Formel (I) eingesetzt, worin wenigstens eines der Substituentenpaare R¹/R^{1'}, R²/R^{2'}, R³/R^{3'} sowie R⁴/R^{4'} eine unterschiedliche Bedeutung hat (z.B. R¹ ≠ R^{1'}). Diese unsymmetrischen Farbstoffe der Formel (I) sind zudem ebenfalls Gegenstand dieser Erfindung.

Unter Massefärben werden im Rahmen dieser Anmeldung insbesondere Verfahren verstanden, bei denen der Farbstoff der Formel (I) in die geschmolzene Kunststoffmasse eingearbeitet wird, z.B. unter Zuhilfenahme eines Extruders oder bei denen der Farbstoff bereits den Ausgangskomponenten zur Herstellung des Kunststoffes, z.B. den Monomeren, vor der Polymerisation zugesetzt wird.

Die Verarbeitungstemperaturen liegen dabei etwa bei 100 bis 380 °C.

Die erfindungsgemäß zu verwendenden Farbstoffe sind teilweise bekannt (z.B. CH-516 628, JP-A 02 292 371) oder können in Analogie zu literaturbekannten Verfahren hergestellt werden. Die Herstellung erfolgt beispielsweise durch eine Vilsmeier-Formylierung und anschließende Kondensation mit einer reaktiven Methylenverbindung, vorzugsweise Malonsäuredinitril.

Die Herstellung erfolgt vorzugsweise durch Kondensation eines substituierten Anilins mit einem Dihalogenalkylen (G1. 1) 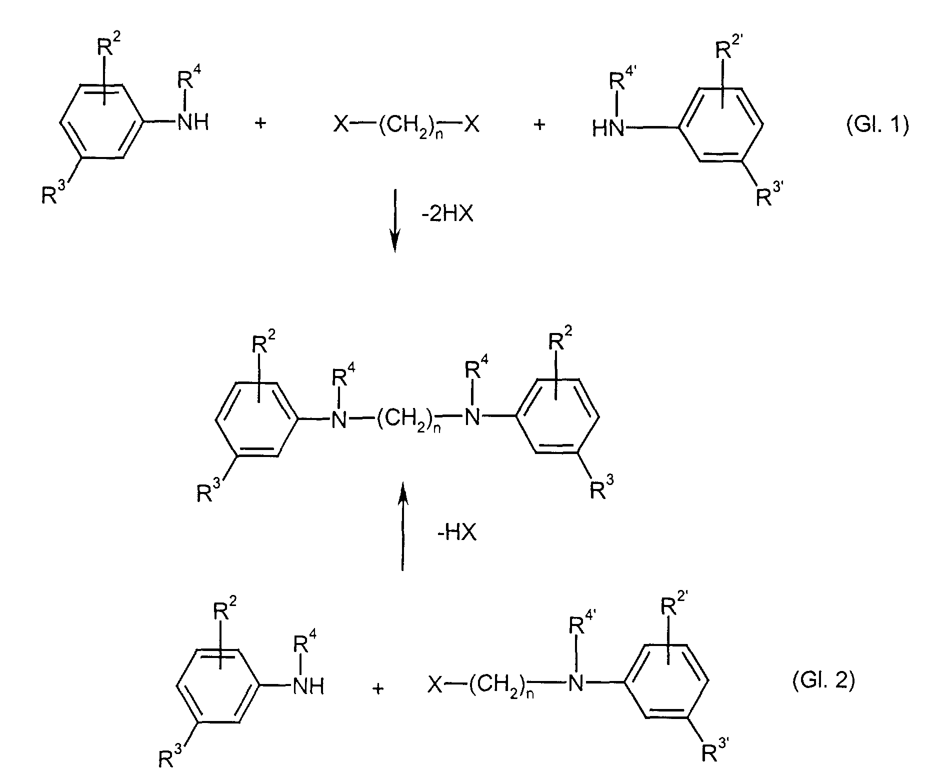 worin
- n: 2 bis 6 bedeutet,
- x: für Halogen, insbesondere Cl oder Br steht und die übrigen Substituenten die obigen Bedeuten haben,
oder eines substituierten Anilins mit einem N-(Halogenalkyl)-anilin (Gl. 2) beispielsweise in einem Lösungsmittel oder in Substanz in Gegenwart einer Base, gefolgt von einer Vilsmeier Formylierung (vorzugsweise durch Umsetzung mit POCl₃ und Dimethylformamid, anschließender Hydrolyse) und anschließender Kondensation mit einer reaktiven Methylenverbindung, vorzugsweise Malonsäuredinitril.

Als geeignete thermoplastische Kunststoffe seien beispielsweise genannt: Celluloseester wie Cellulosenitrat, Celluloseacetat, Cellulosetriacetat, Celluloseacetobutyrat, Cellulosepropionat, Celluloseether wie Methylcellulose, Ethylcellulose, Benzylcellulose, lineare gesättigte Polyesterharz-(Kunststoff)e, Anilinharz-Kunststoffe, Polycarbonate, Polystyrol, Polyvinylcarbazol, Polyvinylchlorid, insbesondere PVC hart, Polymethacrylate, Polyvinylidenchlorid, Polyacrylnitril, Polyoxymethylene, lineare Polyurethane sowie Copolymerisate wie Vinylchlorid-Vinylacetat-Copolymere sowie insbesondere Styrol-Copolymerisate wie Styrol-Acrylnitril-Copolymere (SAN), Styrol-Butadien-Copolymere (SB) und Styrol-α-Methylstyrol-Copolymere (SMS), Acrylnitril/Butadien/Styrol-Copolymere (ABS).

Die erwähnten hochmolekularen Verbindungen können einzeln oder in Gemischen, als plastische Massen oder Schmelzen, die gegebenenfalls zu Fasern versponnen werden können, vorliegen.

Das neue Verfahren eignet sich besonders zur Massefärbung von Polystyrol, insbesondere zur Massefärbung von Poly(meth)acrylaten, vorzugsweise Polymethylmethacrylat, SAN, SMS, ABS sowie Polyethylenterephthalat und Polybutylenterephthalat.

Die zu färbenden Kunststoffe werden zweckmäßig in Form von Pulver, Schnitzeln oder Granulaten mit dem Farbstoff innig vermischt. Dies kann beispielsweise durch Panieren der Kunststoffteilchen mit dem feinverteilten trockenen Farbstoffpulver oder durch Behandeln der Teilchen mit einer Lösung beziehungsweise Dispersion des Farbstoffes in einem organischen Lösungsmittel und nachheriger Entfernung des Lösungsmittels geschehen.

In das erfindungsgemäße Verfahren können auch Mischungen verschiedener Farbstoffe der Formel (I) und/oder Mischungen von Farbstoffen der Formel (I) mit anderen Farbstoffen und/oder anorganischen beziehungsweise organischen Pigmenten eingesetzt werden.

Die Farbstoffe der Formel (I) kommen vorzugsweise in Form ihrer festen, insbesondere pulverförmigen oder Granulatformen zum erfindungsgemäßen Einsatz.

Diese festen Farbstoffpräparationen enthalten wenigstens 95 Gew.-%, vorzugsweise wenigstens 98 Gew.-%, insbesondere mehr als 99 Gew.-% an Farbstoff der Formel (I) und gegebenenfalls bis zu 5 Gew.-% an organischem Bindemittel, jeweils bezogen auf die Farbstoffpräparation.

Diese Farbstoffpräparationen sind ebenfalls Gegenstand der Erfindung.

Als mögliche Bindemittel kommen beispielsweise Ethylenoxid-Propylenoxid-Blockcopolymere in Frage, vorzugsweise solche mit einem Molekulargewicht von 4 000 bis 16 000 g/mol.

Die Farbstoffpräparationen werden insbesondere zur Färbung vorzugsweise als Pulver, insbesondere als gemahlene und gesiebte trockene Pulver, oder aber in Form von Granulaten, wie sie beispielsweise nach EP-A-488 933 hergestellt werden können, eingesetzt.

Das Verhältnis von Farbstoff zu Kunststoff kann, je nach der gewünschten Farbstärke, innerhalb weiter Grenzen schwanken. Im allgemeinen empfiehlt sich die Verwendung von 0,005 - 5, vorzugsweise 0,01 - 2 Gew.-%, Farbstoff auf die Menge des zu färbenden Kunststoffes eingesetzt.

Durch den Zusatz von in den Polymeren unlöslichen Pigmenten, wie z.B. Titandioxid, können entsprechende wertvolle gedeckte Färbungen erhalten werden.

Titandioxid kann beispielsweise in einer Menge von 0,01 bis 10 Gew.-%, vorzugsweise 0,1 bis 5 Gew.-%, bezogen auf die Polymermenge, verwendet werden.

Die behandelten Polymerteilchen werden nach bekannten Verfahren im Extruder geschmolzen und zu Gegenständen, z.B. Folien oder Fasern, ausgepresst oder zu Platten gegossen.

Die Farbgebung der Kunststoffe mit den Farbstoffen der Formel (I) erfolgt beispielsweise derart, dass man einen solchen Farbstoff, gegebenenfalls in Form von Masterbatches, diesen Substraten unter Verwendung von Walzwerken, Misch- oder Mahlapparaten zumischt. Das gefärbte Material wird hierauf nach an sich bekannten Verfahren wie Kalandrieren, Pressen, Strangpressen, Streichen, Gießen oder Spritzguss in die gewünschte endgültige Form gebracht.

Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemäßen Verfahren vor oder nach der Einverleibung des Farbstoffes in die Polymeren eingearbeitet werden. Es ist ferner möglich, zwecks Erzielung verschiedener Farbtöne den hochmolekularen, organischen Stoffen neben den Verbindungen der Formel (I) noch Füllstoffe beziehungsweise andere farbgebende Bestandteile wie Weiss-, Bunt- oder Schwarzpigmente in beliebigen Mengen zuzufügen.

Die erhaltenen grünstichig bis rotstichig gelben Färbungen zeichnen sich durch gute Licht- und Wetterechtheiten aus. Darüber hinaus besitzen die erfindungsgemäßen Farbstoffe in den thermoplastischen Kunststoffen sehr gute Hitzechtheiten.

### Beispiel 1

0,1 g des Farbstoffes der Formel

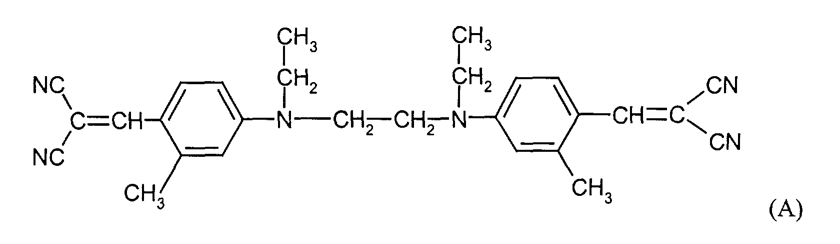

2 g Titandioxid (Bayertitan® R-FK-2) und 100 g eines Polystyrolgranulates werden in einem verschlossenen Gefäß 2 Stunden auf dem Rollbock vermischt. Die erhaltene Mischung wird bei ca. 230°C in Strängen von 2 cm Breite extrudiert und wieder granuliert. Das Granulat wird (mit Hilfe einer Spritzgussmaschine) bei 230 bis 240°C (zu Formlingen) verspritzt. Man erhält rotstichig gelb gefärbte Formlinge mit einer hohen Lichtbeständigkeit und hoher Brillanz.

### Beispiel 2

0,02 g des Farbstoffes der Formel (A) und 100 g eines Polystyrolgranulates werden in einem verschlossenen Gefäß 2 Stunden auf dem Rollbock vermischt. Die erhaltene Gemisch wird anschließend bei 230°C bis 240°C mit Hilfe einer Schneckenspritzgießmaschine zu Formlingen verspritzt. Die gelb gefärbten, transparenten Formlinge weisen eine hohe Lichtechtheit auf.

### Beispiel 3

Ersetzt man den Farbstoff der Formel (I) durch den Farbstoff der Formel (B) 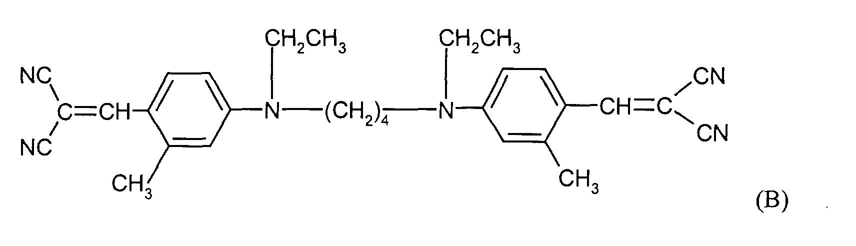 und verfährt im übrigen wie in Beispiel 1 beschrieben, so erhält man gelb gefärbte Formlinge mit einer hohen Lichtechtheit.

### Beispiel 4

Vermischt man 0,035 g des Farbstoffes der Formel (B) und 100 g eines Polystyrolgranulates und verfährt im übrigen wie in Beispiel 2 beschrieben, so erhält man gelb gefärbte, transparente Formlinge mit einer hohen Lichtechtheit.

### Beispiel 5

In 99,97 g Methylmethacrylat werden 0,03 g Farbstoff der Formel (A) gelöst. Nach Zugabe von 0,01 g Dibenzoylperoxid wird die Lösung auf 120°C erhitzt und die Polymerisation gestartet. Nach 30 Minuten wird das anpolymerisierte Methylmethacrylat zwischen zwei Glasplatten bei 80°C während 10 Stunden auspolymerisiert. Man erhält gelb gefärbte, transparente Polymethylmethacrylat-Platten.

### Beispiel 6

0,02 g Farbstoff der Formel (B) und 100 g Polymethylmethacrylat werden trocken vermischt und auf einem Zweiwellenextruder bei 240°C homogenisiert. Das als Strang aus dem Extruder austretende Material wird granuliert. Es wurde anschließend zu Formen verpresst werden. Man erhält einen transparenten, gelb gefärbten Kunststoff mit sehr guter Licht- und Wetterechtheit.

### Beispiel 7

100 g eines handelsüblichen Polycarbonats werden in Form von Granulat mit 0,01 g Feststoff der Formel (A) trocken vermischt. Das so erhaltene Granulat wird auf einem Zweiwellenextruder bei 350°C homogenisiert. Man erhält eine transparente, gelbe Färbung von guter Lichtechtheit. Das gefärbte Polycarbonat wird als Strang aus dem Extruder ausgetragen und zu Granulat verarbeitet. Das Granulat kann nach den üblichen Methoden der Konfektionierung thermoplastischer Massen verarbeitet werden.

### Beispiel 8

Mit 100 g Styrol-Acrylnitril-Copolymerisat werden 0,04 g Feststoff der Formel (B) trocken vermischt und in einem Zweiwellenextruder bei 190°C homogenisiert, granuliert und kann dann zu Formen auf übliche Weise verpresst werden. Man erhält einen transparent gefärbten Kunststoff von guter Lichtechtheit. Arbeitet man unter Zusatz von 1 % Titandioxid, so erhält man eine gedeckte Färbung.

### Beispiel 9

Ersetzt man in Beispiel 1 den Farbstoff der Formel (A) durch den Farbstoff der Formel 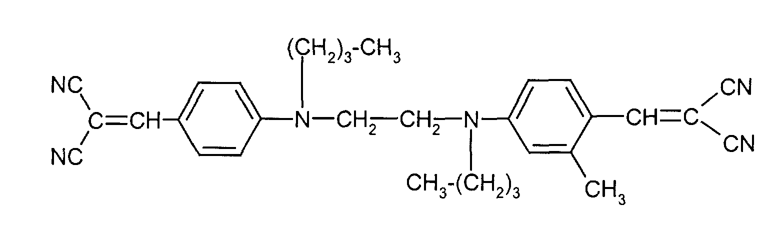 und verfährt im übrigen wie in Beispiel 1 beschrieben, so erhält man gelb gefärbte Formlinge mit guter Lichtechtheit.

### Beispiel 10 bis 15

Anstelle der Farbstoffe der Formeln A, B und C können in den Beispielen 1 bis 9 auch die folgenden Farbstoffe mit ähnlichen Substanzen eingesetzt werden:

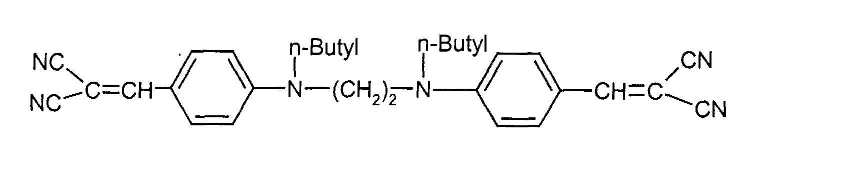

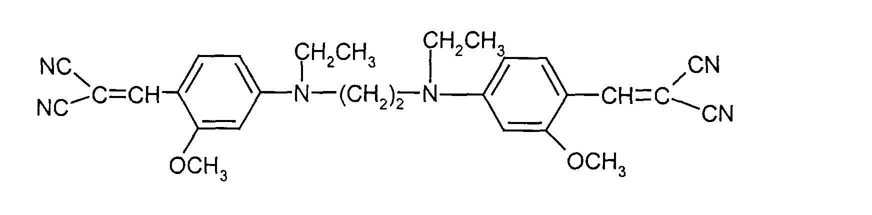

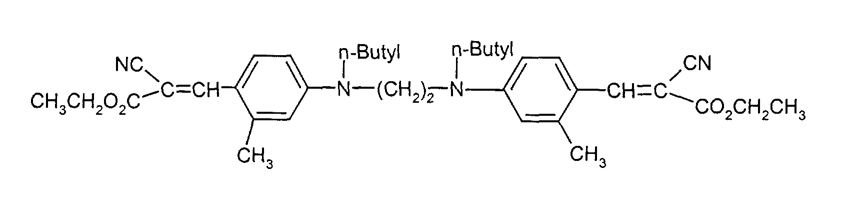

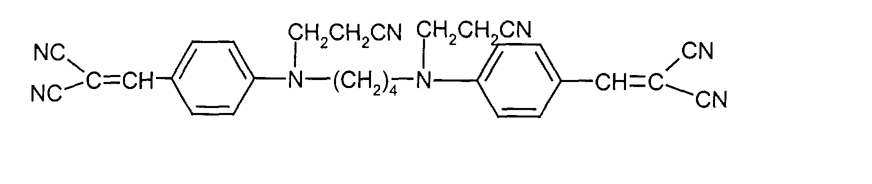

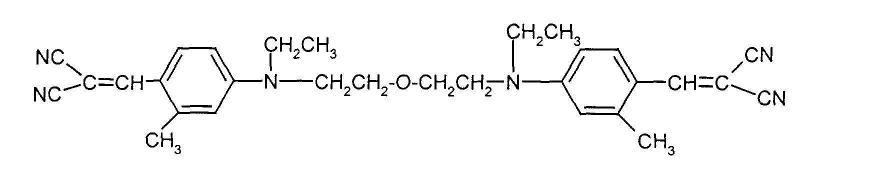

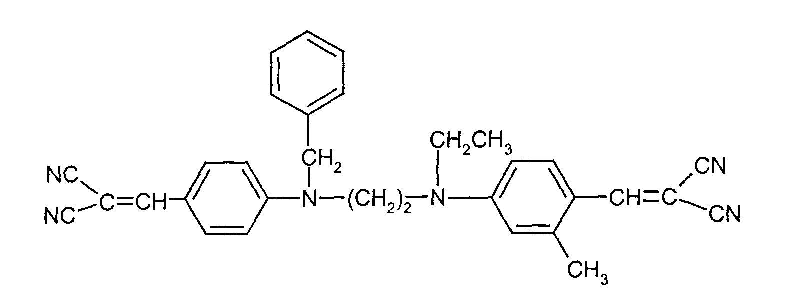

## Patentansprüche

1. Verfahren zum Massefärben von Kunststoffen, **dadurch gekennzeichnet**, dass man Farbstoffe der Formel (I) 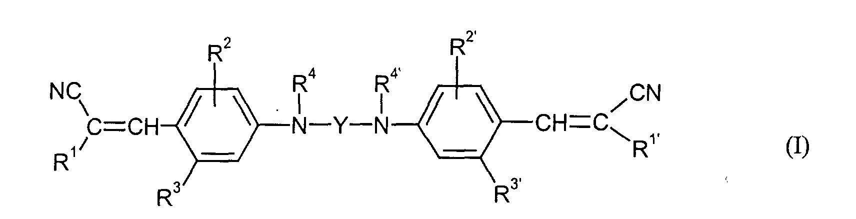 verwendet, worin
Y ein bivalenter Rest aus der Reihe der gegebenenfalls substituierten Arylene oder Alkylene ist, wobei die Alkylenreste gegebenenfalls durch Heteroatome wie O oder S unterbrochen sind,
R¹ und R^{1'} unabhängig voneinander eine elektronenziehende Gruppe, vorzugsweise Cyano oder Alkoxycarbonyl, insbesondere C₁-C₄-Alkoxycarbonyl bedeuten,
R², R^{2'}, R³ und R^{3'} unabhängig voneinander Wasserstoff, Alkyl, insbesondere C₁-C₄-Alkyl, CF₃ oder Halogen, vorzugsweise F oder Cl bedeuten,
R⁴ und R^{4'} unabhängig voneinander für gegebenenfalls substituiertes Alkyl, vorzugsweise C₁-C₆-Alkyl, oder C₇-C₁₂-Aralkyl, vorzugsweise Benzyl stehen.

2. Verfahren gemäß Anspruch 1, **dadurch gekennzeichnet**, dass
Y für gegebenenfalls substituiertes Phenylen, insbesondere 1,3-Phenylen, 1,4-Phenylen oder Methyl-substituiertes 1,3- und 1,4-Phenylen oder gegebenenfalls substituiertes C₂-C₆-Alkylen, insbesondere -CH₂-CH₂-, -CH₂CH₂CH₂-, -(CH₂)₄-, -CH₂CH(CH₃)-, -CH₂CH₂OCH₂CH₂- oder -CH₂CH-S-CH₂CH₂- steht.

3. Verfahren gemäß Anspruch 1, **dadurch gekennzeichnet**, dass
R¹ und R^{1'} unabhängig voneinander CN, CO₂CH₃, CO₂CH₂CH₃, - CO₂(CH₂)₂CH₃ oder CO₂(CH₂)₃CH₃ bedeuten.

4. Verfahren gemäß Anspruch 1, **dadurch gekennzeichnet**, dass die Reste R², R^{2'}, R³ und R^{3'} unabhängig voneinander Wasserstoff, Methyl, Ethyl, Cl, F oder CF3 bedeuten.

5. Verfahren gemäß Anspruch 1, **dadurch gekennzeichnet**, dass die Reste R⁴ und R^{4'} für CH₃, Ethyl, n-Propyl, iso-Propyl, n-Butyl, iso-Butyl, sek.-Butyl und tert.-Butyl bedeuten.

6. Verfahren gemäß Anspruch 1, **dadurch gekennzeichnet**, dass R¹ = R^{1'}, R² = R^{2'}, R³ = R^{3'} und R⁴ = R^{4'} bedeutet.

7. Verfahren gemäß Anspruch 1, **dadurch gekennzeichnet**, dass Farbstoffe der Formel (Ia) eingesetzt werden 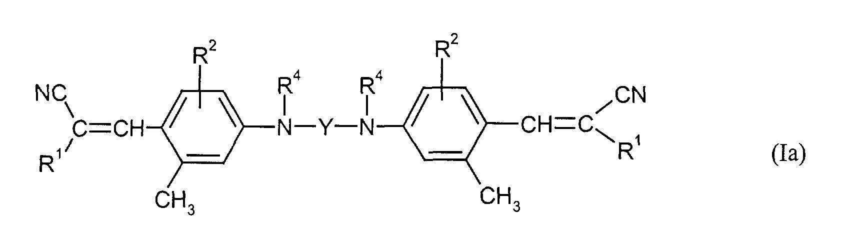 worin
Y für gegebenenfalls substituiertes Phenylen, insbesondere 1,3- oder 1,4-Phenylen oder für gegebenenfalls substituiertes C₂-C₆-Alkylen, insbesondere Ethylen, Propylen oder Butylen steht,
R¹ für CN, CO₂CH₃, CO₂CH₂CH₃ oder CO₂(CH₂)₃CH₃ steht,
R² Wasserstoff, CH₃ oder CH₂CH₃ bedeutet und
R⁴ für CH₃, CH₂CH₃, n-Propyl oder n-Butyl steht.

8. Verfahren gemäß Anspruch 1, **dadurch gekennzeichnet**, dass Farbstoffe der Formel (I) eingesetzt werden, worin wenigstens eine der Substituentenpaare R¹/R^{1'}, R²/R^{2'}, R³/R^{3'} und/oder R⁴/R^{4'} eine unterschiedliche Bedeutung hat.

9. Verfahren gemäß Anspruch 1, **dadurch gekennzeichnet**, dass man wenigstens einen Farbstoff aus der nachstehenden Gruppe einsetzt:

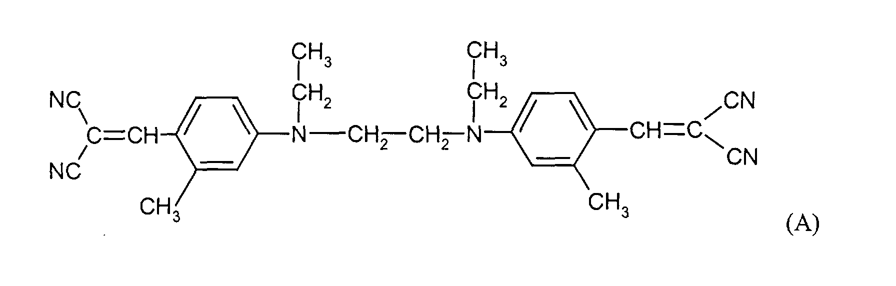

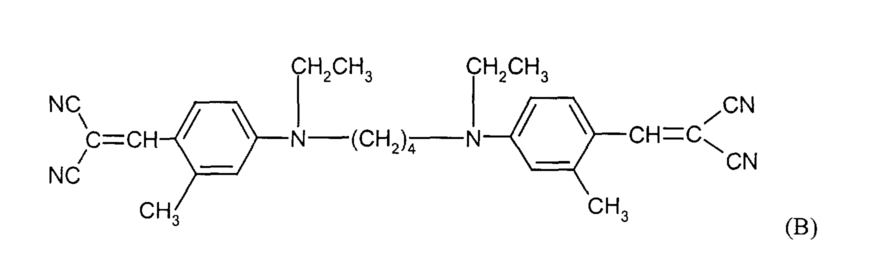

10. Verbindungen der Formel 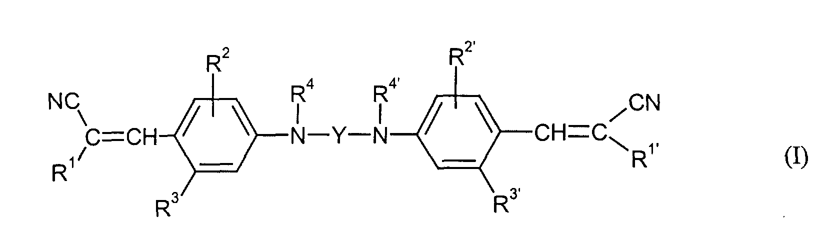 worin
Y ein bivalenter Rest aus der Reihe der gegebenenfalls substituierten Arylene oder Alkylene ist, wobei die Alkylenreste gegebenenfalls durch Heteroatome wie O oder S unterbrochen sind,
R¹ und R^{1'} unabhängig voneinander eine elektronenziehende Gruppe, vorzugsweise Cyano oder Alkoxycarbonyl, insbesondere C₁-C₄-Alkoxycarbonyl bedeuten,
R², R^{2'}, R³ und R^{3'} unabhängig voneinander Wasserstoff, Alkyl, insbesondere C₁-C₄-Alkyl, CF₃ oder Halogen, vorzugsweise F oder Cl bedeuten,
R4 und R4' unabhängig voneinander für gegebenenfalls substituiertes Alkyl, vorzugsweise C₁-C₆-Alkyl oder C₇-C₁₂-Aralkyl, vorzugsweise Benzyl stehen,
wobei wenigstens eines der Substituentenpaare R¹/R^{1'}, R²/R^{2'}, R³/R^{3'} und/oder R⁴/R^{4'} eine unterschiedliche Bedeutung hat.

11. Feste Farbstoffpräparationen, enthaltend wenigstens 95 Gew.-% eines Farbstoffes der Formel (I) gemäß Anspruch 1.

12. Verfahren zur Herstellung der Farbstoffe gemäß Anspruch 10, **dadurch gekennzeichnet**, dass man ein substituiertes Anilin mit einem Dihalogenalkylen reagiert 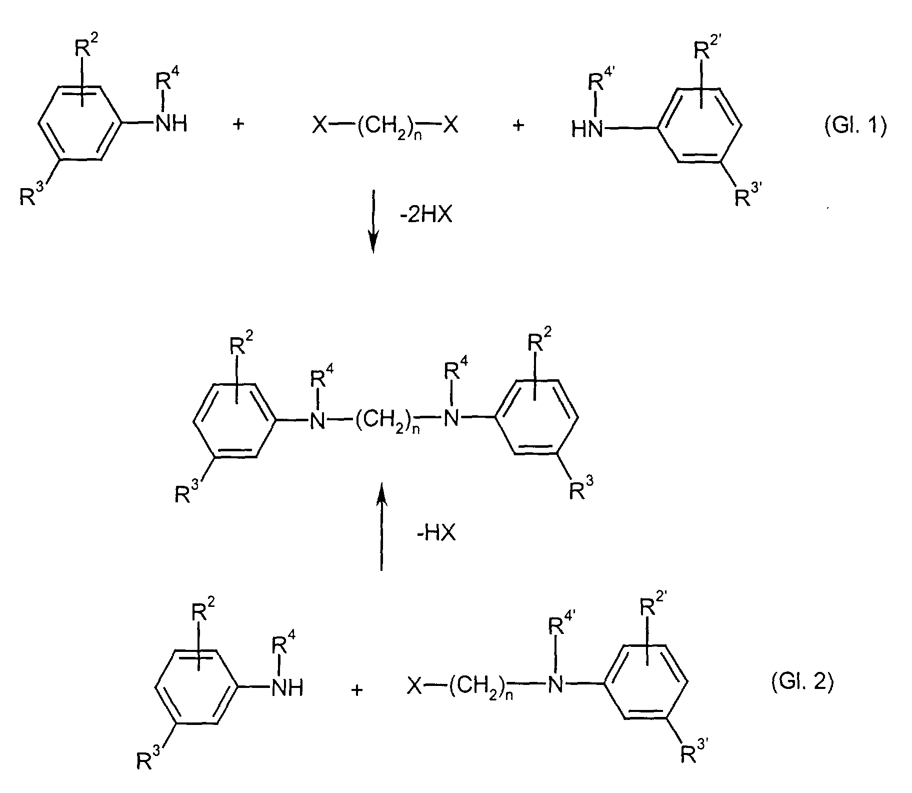 worin
n 2 bis 6 bedeutet, X für Halogen, insbesondere Br oder Cl steht und die übrigen Substituenten die obigen Bedeutungen haben,
oder ein substituiertes Anilin mit einem N-(Halogenalkyl)-anilin reagiert (Gl. 2) beispielsweise in einem Lösungsmittel oder in Substanz in Gegenwart einer Base, gefolgt von einer Vilsmeier Formylierung (vorzugsweise durch Umsetzung mit POCl₃ und Dimethylformamid, anschließender Hydrolyse) und anschließender Kondensation mit einer reaktiven Methylenverbindung, vorzugsweise Malonsäuredinitril.

13. Kunststoffe gefärbt mit wenigstens einem Farbstoff gemäß Anspruch 10.

14. Copolymerisat aus der Gruppe von Styrol/Acrylnitril-Copolymeren (SAN) und Acrylnitril/Butadien/Styrol-Copolymere (ABS) gefärbt mit wenigstens einem Farbstoff der Formel (I) gemäß Anspruch 1.
